# EUROPEAN PATENT APPLICATION

(11) **EP 3 647 875 A1**
(43) Date of publication of application: **06.05.2020**
(21) Application number: 18825342.1
(22) Date of filing: 22.06.2018
(51) Int. Cl.: G03G 9/087, C08G 63/02, C08G 81/02, C08L 67/00

(54) **BINDER RESIN COMPOSITION FOR TONERS**

(30) Priority: 26.06.2017 JP 2017124651
(71) Applicant: Kao Corporation, Chuo-Ku Tokyo 103-8210 (JP)
(72) Inventor: WAKABAYASHI, Yuki, Wakayama-shi Wakayama 640-8580 (JP); YAMAMOTO, Taiki, Wakayama-shi Wakayama 640-8580 (JP)
(74) Representative: Vossius & Partner Patentanwälte Rechtsanwälte mbB
(86) International application number: PCT/JP2018/023878
(87) International publication number: WO 2019/004095

(57) **Abstract**

The present invention relates to a binder resin composition capable of giving a toner remarkably excellent in fusing property on polypropylene films, and to a toner for developing electrostatic images that contains the binder resin composition, [1] A binder resin composition for toners, containing an amorphous polyester resin which has a polyester resin-derived constituent moiety that is a constituent moiety derived from a polyester resin and a modified polypropylene polymer A-derived constituent moiety that is a constituent moiety derived from a modified polypropylene polymer A having a carboxylic acid group or a carboxylic anhydride group and in which the polyester resin-derived constituent moiety and the modified polypropylene polymer A-derived constituent moiety bond to each other via a covalent bond, wherein the polymer A is a polypropylene polymer terminally-modified with an unsaturated bond-having carboxylic acid compound or an anhydride thereof, and in the polyester resin, the amount of the polymer A-derived constituent unit is 8 parts by mass or more and 30 parts by mass or less relative to 100 parts by mass of the total of the alcohol component and the carboxylic acid component constituting the polyester resin-derived constituent moiety; and [2] a toner for developing electrostatic images, containing the binder resin composition of [1].

## Description

### FIELD OF THE INVENTION

The present invention relates to a binder resin composition for toners, and to a toner for developing electrostatic images that contains the binder resin composition.

### BACKGROUND OF THE INVENTION

In the field of electrophotography, it is desired to develop a toner for developing electrostatic images that can enhance picture quality and can satisfy speed-up technique with the development of electrophotographic systems.

For example, Patent Literature 1 describes a polyester resin for toners, which contains (a) an aromatic dicarboxylic acid or a lower alkyl ester thereof, (b) a specific aromatic diol and (c) an ester bond-forming group-containing polypropylene polymer having Mw of 50,000 or less, in which (a) is in an amount of 60 mol% or more relative to the total acid component in the polyester, and (c) is in an amount of 50 wt% or less relative to the total condensed polyester, and which has a Tg of 40 to 70°C and a softening temperature of 85 to 120°C. With that, the literature describes provision of a polyester resin for toners that has good antiblocking property, melt flowability, low-temperature fixing property and anti-offset property.

Patent Literature 2 describes a binder resin composition for toners, which contains a polyester resin containing a compound (X) satisfying the following requirements (i) to (iii) as a constituent unit.
(i) The number of the functional groups (f) capable of reacting with an acid or an alcohol is 1.0 (mmol/g) or more.
(ii) The resin contains a branched long-chain alkyl group (r) having 30 or more carbon atoms.
(iii) The endothermic amount in melting is 100 (J/g) or less.

With that, the literature describes provision of a toner having good fixing property, anti-offset property, image stability and durability, and a binder resin composition for toners.

Patent Literature 3 describes a binder resin composition for toner for developing electrostatic images, which contains a polyester resin and a polypropylene wax (W-1) and which has an endothermic amount ratio ΔH_{CW/W} of 0.10 or more and 0.80 or less, wherein ΔH_{CW/W} is expressed by formula (1): endothermic amount ratio ΔH_{CW/W} = ΔH_{CW}/ΔH_{W} (1) where ΔH_{CW} is an endothermic amount at a melting endothermic peak per gram of the polypropylene wax (W-1), as measured as the binder resin composition, and ΔH_{W} is an endothermic amount at a melting endothermic peak per gram of the polypropylene wax (W-1), as measured as the polypropylene wax (W-1) alone. The literature describes that the binder resin composition can provide a binder resin composition for toner for developing electrostatic images, which is capable of giving a toner excellent in a fixing property on PP films.

### CITATION LIST

### PATENT LITERATURE

Patent Literature 1: JP 7-114208A
Patent Literature 2: JP 2009-14820A
Patent Literature 3: WO2016/186129

### SUMMARY OF THE INVENTION

The present invention relates to the following aspects [1] and [2].
[1] A binder resin composition for toners, containing an amorphous polyester resin which has a polyester resin-derived constituent moiety that is a constituent moiety derived from a polyester resin and a modified polypropylene polymer A-derived constituent moiety that is a constituent moiety derived from a modified polypropylene polymer A having a carboxylic acid group or a carboxylic anhydride group and in which the polyester resin-derived constituent moiety and the modified polypropylene polymer A-derived constituent moiety bond to each other via a covalent bond, wherein:
   the polymer A is a polypropylene polymer terminally modified with an unsaturated bond-having carboxylic acid compound or an anhydride thereof, and
   in the polyester resin, the amount of the polymer A-derived constituent unit is 8 parts by mass or more and 30 parts by mass or less relative to 100 parts by mass of the total of the alcohol component and the carboxylic acid component constituting the polyester resin-derived constituent moiety.
[2] A toner for developing electrostatic images, containing the binder resin composition according to [1].

### DETAILED DESCRIPTION OF THE INVENTION

On the other hand, with the diversification of printing media, electrophotographic printing on any other printing media than paper has become desired. One of mainstream media is a polypropylene film (hereinafter also referred to as "PP film"), which is used for PET bottle labels and various packages. On the other hand, paper and polypropylene greatly differ in the characteristics as printing media, such as the polarity of the materials thereof and the surface conditions. Accordingly, the conventionally developed toners described in, for example, Patent Literatures 1 and 2 have such a problem that they are hardly fixed onto PP films.

In the toner disclosed in Patent Literature 3, a polypropylene wax dispersed in an extremely fine size is contained in the binder resin, and therefore the toner is desired to be further improved in point of stability and producibility.

In general toners, a toner mixed with plural resins is used. In such a case, a binder resin containing a polypropylene wax is mixed with any other resin and used, the fixing property of the toner on a polypropylene film worsens, and therefore, a binder resin capable of realizing a further more remarkably excellent fixing property on a polypropylene film is desired.

The aspects of the present invention relate to a binder resin composition capable of giving a toner remarkably excellent in a fixing property on a polypropylene film, and a toner for developing electrostatic images that contains the binder resin composition.

The present inventors have found that a binder resin composition containing a polyester resin, which has a polyester resin-derived constituent moiety that is a constituent moiety derived from a polyester resin and a modified polypropylene polymer A-derived constituent moiety that is a constituent moiety derived from a modified polypropylene polymer A having a carboxylic acid group or a carboxylic anhydride group and in which the polymer A is a polypropylene polymer terminally modified with an unsaturated bond-having carboxylic acid compound or an anhydride thereof and is blended in an amount falling within a specific range, can remarkably enhance the fixing property of toner on a polypropylene film. In addition, the present inventors have found that by using the binder resin composition, the storability, the printing durability and the offset resistance of toner can be enhanced.

Specifically, the aspects of the present invention relate to the above-mentioned [1] and [2].

According to the present invention, there can be provided a binder resin composition capable of giving a toner excellent in a fixing property on polypropylene films, and a toner for developing electrostatic images that contains the binder resin composition.

Further, according to the present invention, there can be provided a binder resin composition capable of giving a toner excellent in storability, printing durability and offset resistance in addition to fixing property on polypropylene films, and a toner for developing electrostatic images that contains the binder resin composition.

### [Binder Resin Composition]

One aspect of the present invention is a binder resin composition for toners, containing an amorphous polyester resin which has a polyester resin-derived constituent moiety that is a constituent moiety derived from a polyester resin and a modified polypropylene polymer A-derived constituent moiety that is a constituent moiety derived from a modified polypropylene polymer A having a carboxylic acid group or a carboxylic anhydride group (hereinafter this may be simply referred to as "polymer A") and in which the polyester resin-derived constituent moiety and the modified polypropylene polymer A-derived constituent moiety bond to each other via a covalent bond (hereinafter this may be referred to as "polyester resin A"), wherein:
the polymer A is a polypropylene polymer terminally modified with an unsaturated bond-having carboxylic acid compound or an anhydride thereof, and
in the polyester resin, the amount of the polymer A-derived constituent unit is 8 parts by mass or more and 30 parts by mass or less relative to 100 parts by mass of the total of the alcohol component and the carboxylic acid component constituting the polyester resin-derived constituent moiety (hereinafter this may be simply referred to as "binder resin composition").

Though not clear, the reason why the binder resin composition of one aspect of the present invention can give a toner for developing electrostatic images that is excellent in a fixing property on PP films may be considered to be as follows.

The binder resin composition of one aspect of the present invention contains a polyester resin A that has a constituent moiety derived from a polyester resin, and a constituent moiety derived from a modified polypropylene polymer A having a carboxylic acid group or a carboxylic anhydride group. The polyester resin-derived constituent moiety and the polymer A-derived constituent moiety bond to each other via a covalent bond to form a structure complexed on a molecular level. With that, it is considered that, in printing under heat for fixing on a PP film through electrophotography, the polymer A-derived constituent moiety in the polyester resin A can align in the PP film direction to express intermolecular interaction between the PP film and the polyester resin, thereby attaining the fixing property on the PP film.

The reason why the storability, the printing durability and the offset resistance can be improved may be considered to be as follows.

It is considered that since the polyester resin A is used, the polyester resin-derived constituent moiety and the polymer A-derived constituent moiety bond to each other via a covalent bond and are complexed on a molecular level, and accordingly, the polymer A and the binder resin are homogenized to attain thermal stability, thereby improving storage stability.

In addition, it is considered that since the polymer A-derived constituent moiety has a flexible molecular structure, the impact stability of toner particles is improved, thereby enhancing printing durability.

Further, it is considered that since the polymer A-derived constituent moiety has a hydrophobic property, the dispersibility of the polymer contained in toner is improved so that the fusing behavior of toner relative to fixing rollers is improved, thereby improving the hot offset resistance.

The definitions of various terms in this description are described below.

Whether a resin is crystalline or amorphous can be determined by the crystallinity index of the resin. The crystallinity index is defined by a ratio of the softening point of a resin to the polyester constituent moiety-derived endothermic maximum peak temperature thereof (softening point (°C)/endothermic maximum peak temperature (°C)) in the measurement method described in the section of Examples given hereinunder. A crystalline resin is a resin whose crystallinity index is 0.65 or more and less than 1.4, preferably 0.7 or more, more preferably 0.9 or more, and is preferably 1.2 or less. An amorphous resin is a resin whose crystallinity index is 1.4 or more or less than 0.65. The crystallinity index can be appropriately controlled depending on the kind and the ratio of raw material monomers, and the production conditions such as the reaction temperature, the reaction time and the cooling speed. The polyester resin constituent moiety-derived peak can be assigned according to an ordinary method, and generally appears on a low-temperature side of an endothermic peak derived from a modified polypropylene polymer A-derived constituent moiety. In the case where assignment to any peak is unclear, a polyester resin alone and a modified polypropylene polymer A alone are separately measured using a differential scanning calorimeter under the condition mentioned above, and the endothermic peak at a temperature nearer to each endothermic peak thereof is assigned to the endothermic peak derived from each constituent moiety.

"Carboxylic acid compound" is a concept including not only the carboxylic acid itself but also an anhydride to form an acid through decomposition during reaction and an alkyl ester of a carboxylic acid (for example, the alkyl group has 1 or more and 3 or less carbon atoms).

In the case where a carboxylic acid compound is an alkyl ester of a carboxylic acid, the carbon number of the carboxylic acid compound does not include the carbon number of the alkyl group that is an alcohol residue of the ester.

"Binder resin" means a resin component contained in the toner that contains the polyester resin A.

### <Polyester Resin A>

Examples of the polyester resin A include a polyester resin having a polyester resin-derived constituent moiety and a polymer A-derived constituent moiety, in which the polyester resin-derived constituent moiety and the modified polypropylene polymer A-derived constituent moiety bond to each other via a covalent bond, and a polyester resin modified substantially in such a degree that the modified resin does not detract from the characteristics of the unmodified resin. Examples of the modified polyester resin include a urethane-modified polyester resin where the polyester resin-derived constituent moiety is modified with a urethane bond, and an epoxy-modified polyester resin in which the polyester resin-derived constituent moiety is modified with an epoxy bond.

The polyester resin-derived constituent moiety and the modified polypropylene polymer A-derived constituent moiety bond to each other via a covalent bond.

Examples of the covalent bond include an ester bond, an ether bond, an amide bond, a urethane bond, and a bond that contains a linking group to be coupled with any of these bonds.

Examples of the linking group include a divalent or higher polyvalent hydrocarbon group having 1 or more and 6 or less carbon atoms. Examples of the linking group include a methylene group, an ethylene group, a propylene group, and a phenyl group.

Above all, bonding through an ester bond is preferable, and direct bonding through an ester bond is more preferable.

### [Polyester Resin]

Hereinunder the polyester resin-derived constituent moiety is described.

The "polyester resin-derived constituent moiety" means a resin constituent moiety in which a part of a polyester resin bonds to any other atomic group.

For example the polyester resin is a polycondensate of an alcohol component and a carboxylic acid component.

Preferably, from the viewpoint of improving low-temperature fixing property, the alcohol component includes an alkylene oxide adduct of bisphenol A represented by a formula (I): 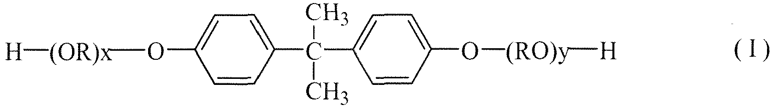 wherein OR and RO each represent an oxyalkylene group, R represents an ethylene or propylene group, x and y each represent an average addition molar number of an alkylene oxide and each is a positive number, and a value of the sum of x and y is 1 or more, preferably 1.5 or more, and is 16 or less, preferably 8 or less, more preferably 4 or less.

The alkylene oxide adduct of bisphenol A represented by the formula (I) includes polyoxypropylene adduct of 2,2-bis(4-hydroxyphenyl)propane, and polyoxyethylene adduct of 2,2-bis(4-hydroxyphenyl)propane. One or more of these may be used.

The content of the alkylene oxide adduct of bisphenol A represented by the formula (I) is preferably 70 mol% or more in the alcohol component, more preferably 80 mol% or more, even more preferably 90 mol% or more, further more preferably 95 mol% or more, and is preferably 100 mol% or less, and further more preferably 100 mol%.

The alcohol component is preferably an aliphatic alcohol having 2 or more and 6 or less carbon atoms.

The carbon number of the aliphatic alcohol is preferably 2 or more and 4 or less, more preferably 2 or 3.

Examples of the aliphatic alcohol having 2 or more and 6 or less carbon atoms include ethylene glycol, 1,2-propanediol, 1,3-propanediol, 1,4-butanediol, 1,5-pentanediol, neopentyl glycol, and 1,6-hexanediol. Among these, ethylene glycol, 1,2-propanediol and neopentyl glycol are preferred, and ethylene glycol and 1,2-propanediol are more preferred. A combination of ethylene glycol and 1,2-propanediol is even more preferred.

The content of the aliphatic alcohol having 2 or more and 6 or less carbon atoms is preferably 70 mol% or more in the alcohol component, more preferably 80 mol% or more, even more preferably 90 mol% or more, further more preferably 95 mol% or more, and is 100 mol% or less, further more preferably 100 mol%.

Examples of the other alcohol component include other aliphatic diols, and trihydric or higher polyhydric alcohols such as glycerin.

The content of the other alcohol component is preferably 30 mol% or less, more preferably 20 mol% or less, even more preferably 10 mol% or less.

Examples of the carboxylic acid component include an aromatic dicarboxylic acid compound, an aliphatic dicarboxylic acid compound and a trivalent or higher polybasic carboxylic acid compound.

Among these, from the viewpoint of improving printing durability, the carboxylic acid component preferably includes an aromatic dicarboxylic acid compound.

Examples of the aromatic dicarboxylic acid compound include phthalic acid, isophthalic acid, and terephthalic acid. Among these, from the viewpoint of low-temperature fixing property, at least one selected from terephthalic acid and isophthalic acid is preferred, and terephthalic acid is more preferred.

The content of the aromatic dicarboxylic acid compound in the carboxylic acid component is, from the viewpoint of low-temperature fixing property, preferably 20 mol% or more, more preferably 40 mol% or more, even more preferably 60 mol% or more, further more preferably 80 mol% or more, and is 100 mol% or less, preferably 100 mol% or less.

Examples of the aliphatic dicarboxylic acid compound include aliphatic dicarboxylic acids such as oxalic acid, malonic acid, maleic acid, fumaric acid, citraconic acid, itaconic acid, glutaconic acid, succinic acid optionally substituted with an alkyl group having 1 or more and 20 or less carbon atoms or an alkenyl group having 2 or more and 20 or less carbon atoms, and adipic acid.

Succinic acid substituted with an alkyl group having 1 or more and 20 or less carbon atoms or an alkenyl group having 2 or more and 20 or less carbon atoms is preferably succinic acid substituted with an alkyl group or an alkenyl group having 6 or more and 14 or less carbon atoms, more preferably succinic acid substituted with an alkyl group or an alkenyl group having 8 or more and 12 or less carbon atoms. Specifically, there are mentioned octylsuccinic acid and dodecenylsuccinic acid (tetrapropenylsuccinic acid).

Among these, fumaric acid is preferred.

The content of the aliphatic dicarboxylic acid compound in the carboxylic acid component is, from the viewpoint of low-temperature fixing property, preferably 50 mol% or more, more preferably 60 mol% or more, even more preferably 65 mol% or more, and is 100 mol% or less, preferably 95 mol% or less, more preferably 90 mol% or less, even more preferably 85 mol% or less, further more preferably 80 mol% or less.

Examples of the trivalent or higher polybasic carboxylic acid include 1,2,4-benzenetricarboxylic acid (trimellitic acid), 2,5,7-naphthalenetricarboxylic acid, and pyromellitic acid. Among these, trimellitic acid or an anhydride thereof (hereinafter these may be referred to as "trimellitic acid compound") is preferred.

The content of the trivalent or higher polybasic carboxylic acid compound in the carboxylic acid component is, from the viewpoint of low-temperature fixing property, preferably 5 mol% or more, more preferably 10 mol% or more, even more preferably 20 mol% or more, and is preferably 50 mol% or less, more preferably 45 mol% or less, even more preferably 40 mol% or less.

The alcohol component may appropriately contain a monohydric alcohol, and the carboxylic acid component may appropriately contain a monobasic carboxylic acid component.

The ratio of the carboxy group in the carboxylic acid component to the hydroxy group in the alcohol component [COOH group/OH group] is preferably 0.7 or more, more preferably 0.8 or more, and is preferably 1.3 or less, more preferably 1.2 or less.

The equivalent ratio of COOH group to OH group in the raw materials (alcohol component and carboxylic acid component) for the polyester resin is, from the viewpoint of increasing the softening point of the polyester resin to be obtained, preferably such that the COOH group is excessive (that is, the above ratio [COOH group/OH group] is more than 1.0). From the viewpoint of lowering the softening point of the polyester resin to be obtained, preferably, the OH group is excessive (that is, the above ratio [COOH group/OH group] is less than 1.0).

### [Addition Polymer Resin]

From the viewpoint of improving hot offset resistance, the polyester resin A may further has an addition polymer resin-derived constituent moiety that is a constituent moiety derived from an addition polymer resin.

The" addition polymer resin-derived constituent moiety" means a constituent moiety in which a part of an addition polymer resin bonds to any other atomic group.

The addition polymer resin is preferably an addition polymerized product of a raw material monomer containing a styrenic compound, more preferably an addition polymerized product of a raw material monomer that contains a styrenic compound and a vinylic monomer having an aliphatic hydrocarbon group having 3 or more and 22 or less carbon atoms.

Examples of the styrenic compound include a substituted or unsubstituted styrene. Examples of the substituent include an alkyl group having 1 or more and 5 or less carbon atoms, a halogen atom, an alkoxy group having 1 or more and 5 or less carbon atoms, and a sulfonic acid group or a salt thereof.

Examples of the styrenic compound include styrene and other styrene compounds such as methylstyrene, α-methylstyrene, β-methylstyrene, tert-butylstyrene, chlorostyrene, chloromethylstyrene, methoxystyrene, and styrenesulfonic acid or a salt thereof. Among these, styrene is preferred.

The content of the styrenic compound, preferably styrene, in the raw material monomer for the vinylic resin segment is preferably 50% by mass or more, more preferably 70% by mass or more, even more preferably 80% by mass or more, and is preferably 95% by mass or less, more preferably 93% by mass or less, even more preferably 90% by mass or less.

The carbon number of the hydrocarbon group in the vinylic monomer having an aliphatic hydrocarbon group is preferably 3 or more, more preferably 4 or more, even more preferably 6 or more, and is preferably 22 or less, more preferably 20 or less, even more preferably 18 or less.

Examples of the aliphatic hydrocarbon group include an alkyl group, an alkynyl group, and an alkenyl group. Among these, an alkyl group or an alkenyl group is preferred, and an alkyl group is more preferred. The aliphatic hydrocarbon group may be branched or linear.

The vinylic monomer having an aliphatic hydrocarbon group is preferably an alkyl (meth)acrylate. In the case of an alkyl (meth)acrylate, the hydrocarbon group is an alcohol residue of the ester.

Examples of the alkyl (meth)acrylate include methyl (meth)acrylate, ethyl (meth)acrylate, (iso)propyl (meth)acrylate, 2-hydroxyethyl (meth)acrylate, (iso or tert)butyl (meth)acrylate, 2-ethylhexyl (meth)acrylate, (iso)octyl (meth)acrylate, (iso)decyl (meth)acrylate, and (iso)stearyl (meth)acrylate. One or more of these may be used. Here, "(iso or tert)" and "(iso)" are meant to include both a case with the prefix and a case without the prefix, and in the case where the prefix is absent, the wording indicates normal. "(Meth)acrylate" is at least one selected from acrylate and methacrylate.

The amount of the vinylic monomer having an aliphatic hydrocarbon group having 3 or more and 22 or less carbon atoms in the raw material monomer for the vinylic resin segment is preferably 5% by mass or more, more preferably 10% by mass or more, even more preferably 15% by mass or more, and is preferably 50% by mass or less, more preferably 35% by mass or less, even more preferably 25% by mass or less.

Examples of the other raw material monomer include ethylenic unsaturated monoolefins such as ethylene and propylene; conjugated dienes such as butadiene; halovinyl compounds such as vinyl chloride; vinyl esters such as vinyl acetate and vinyl propionate; aminoalkyl (meth)acrylates such as dimethylaminoethyl (meth)acrylate; vinyl ethers such as methyl vinyl ether; vinylidene halides such as vinylidene chloride; and *N-*vinyl compounds such as *N-*vinylpyrrolidone.

In the raw material monomer for the addition polymer resin, the total amount of the styrenic compound and the vinyl monomer having an aliphatic hydrocarbon group having 3 or more and 22 or less carbon atoms is preferably 80% by mass or more, more preferably 90% by mass or more, even more preferably 95% by mass or more, and is 100% by mass or less, further more preferably 100% by mass.

The polyester resin A contains a polyester resin-derived constituent moiety and an addition polymer resin-derived constituent moiety which bond to each other, and therefore has a constituent unit derived from a bireactive monomer that bonds the polyester resin-derived constituent moiety to the addition polymer resin-derived constituent moiety via a covalent bond.

"Constituent unit derived from a bireactive monomer" means a unit formed through reaction with a functional group and a vinyl moiety of a bireactive monomer.

Examples of the bireactive monomer include a vinylic monomer having at least one functional group selected from a hydroxy group, a carboxy group, an epoxy group, a primary amino group and a secondary amino group, in the molecule. Among these, a vinylic monomer having a hydroxy group or a carboxy group is preferred from the viewpoint of reactivity, a vinylic monomer having a carboxy group is more preferred.

Examples of the bireactive monomer include acrylic acid, methacrylic acid, fumaric acid and maleic acid. Among these, from the viewpoint of reactivity for both polycondensation and addition polymerization, acrylic acid and methacrylic acid are preferred, and acrylic acid is more preferred.

The amount of the bireactive monomer-derived constituent unit relative to 100 parts by mol of the alcohol component for the polyester resin-derived constituent moiety of the polyester resin A is preferably 1 part by mol or more, more preferably 3 parts by mol or more, even more preferably 5 parts by mol or more, and is preferably 30 parts by mol or less, more preferably 25 parts by mol or less, even more preferably 20 parts by mol or less.

In the case where the polyester resin A contains an addition polymer resin-derived constituent moiety, the amount of the polyester resin-derived constituent moiety in the polyester resin A is preferably 40% by mass or more, more preferably 50% by mass or more, even more preferably 60% by mass or more, further more preferably 70% by mass or more, further more preferably 75% by mass or more, and is preferably 95% by mass or less, more preferably 85% by mass or less, even more preferably 80% by mass or less.

In the case where the polyester resin A contains an addition polymer resin-derived constituent moiety, the amount of the addition polymer resin-derived constituent moiety in the polyester resin A is preferably 1% by mass or more, more preferably 5% by mass or more, even more preferably 10% by mass or more, further more preferably 15% by mass or more, and is preferably 60% by mass or less, more preferably 50% by mass or less, even more preferably 40% by mass or less, further more preferably 30% by mass or less.

In the case where the polyester resin A contains an addition polymer resin-derived constituent moiety, the amount of the constituent unit derived from a bireactive monomer in the polyester resin A is preferably 0.1% by mass or more, more preferably 0.5% by mass or more, even more preferably 0.8% by mass or more, and is preferably 10% by mass or less, more preferably 5% by mass or less, even more preferably 3% by mass or less.

In the case where the polyester resin A contains an addition polymer resin-derived constituent moiety, the total amount of the polyester resin-derived constituent moiety, the addition polymer resin-derived constituent moiety and the constituent unit derived from a bireactive monomer in the polyester resin A is preferably 80% by mass or more, more preferably 90% by mass or more, even more preferably 93% by mass or more, further more preferably 95% by mass or more, and is 100% by mass or less, preferably 99% by mass or less.

The mass ratio of the polyester resin-derived constituent moiety to the addition polymer resin-derived constituent moiety (polyester resin-derived constituent moiety/addition polymer resin-derived constituent moiety) in the polyester resin A is preferably 55/45 or more, more preferably 60/40 or more, even more preferably 65/35 or more, further more preferably 70/30 or more, and is preferably 99/1 or less, more preferably 97/3 or less, even more preferably 93/7 or less, further more preferably 90/10 or less, further more preferably 85/15 or less.

The above-mentioned amount is calculated based on the ratio of the amount of the raw material monomer for the polyester resin-derived constituent moiety and the addition polymer resin-derived constituent moiety, the amount of the bireactive monomer, and the amount of the polymerization initiator, with the proviso that the amount of water due to dehydration in polycondensation for the polyester resin-derived constituent moiety and others is excluded. In the case where a polymerization initiator is used, for the calculation, the mass of the polymerization initiator is added to the mass of the addition polymer resin-derived constituent moiety and regarded as one constituting the mass of the addition polymer resin-derived constituent moiety.

### [Polymer A]

The polyester resin A contains, from the viewpoint of realizing excellent fixing property on PP films, and from the viewpoint of toner storability, printing durability and offset resistance, a constituent moiety derived from a modified polypropylene polymer A having a carboxylic acid group or a carboxylic anhydride group. The polymer A is, from the viewpoint of remarkably excellent fixing property on PP films, and from the viewpoint of toner storability, printing durability and offset resistance, a polypropylene polymer terminally modified with a carboxylic acid compound having an unsaturated bond or an anhydride thereof (hereinafter this may be referred to as "terminal-modified polypropylene polymer").

Examples of an unmodified polypropylene polymer include polypropylene, and copolymers of propylene and any other olefin.

Examples of polypropylene include polypropylene obtained according to a method of polymerization of ordinary propylene, a method of thermally decomposing polypropylene for ordinary molding, which is used for containers and others, or a method of separating and purifying a low-molecular polypropylene that is formed as a side product in producing polypropylene for use for containers and others for ordinary molding.

Examples of the copolymer of propylene and any other olefin include a copolymer obtained through polymerization of polypropylene with any other olefin having an unsaturated bond capable of copolymerizing with propylene. The copolymer may be any of a random copolymer or a block copolymer.

Examples of the other olefin include ethylene, and an olefin having 4 or more and 10 or less carbon atoms. Examples of the other olefin include ethylene, butene, pentene, hexene and 2-ethylhexene.

The terminal-modified polypropylene polymer is preferably a polypropylene polymer modified with an unsaturated bond-having carboxylic acid compound or an anhydride thereof at one terminal only thereof (hereinafter this may be referred to as "one-terminal-modified polypropylene polymer").

Examples of the unsaturated bond-having carboxylic acid compound or an anhydride thereof include maleic anhydride, fumaric acid and itaconic acid. Among these, maleic anhydride is preferred.

The polypropylene polymer terminally modified with an unsaturated bond-having carboxylic acid compound or an anhydride thereof can be obtained, for example, by ene-reaction of a polypropylene polymer having an unsaturated bond at the terminal thereof and an unsaturated bond-having carboxylic acid compound or an anhydride thereof. A one-terminal-modified polypropylene polymer can be obtained, for example, by ene-reaction of a polypropylene polymer having an unsaturated bond at one terminal thereof and an unsaturated bond-having carboxylic acid compound or an anhydride thereof. The polypropylene polymer having an unsaturated bond at one terminal thereof can be obtained according to a known method, and can be produced, for example, by using a vanadium catalyst, a titanium catalyst or a zirconium catalyst.

Examples of the polymer A include polypropylene terminally modified with maleic anhydride, and a copolymer of propylene terminally modified with maleic anhydride and any other olefin.

Among these, from the viewpoint of more improving fixing property on PP films and from the viewpoint of more improving toner storability, printing durability and offset resistance, polypropylene terminally modified with maleic anhydride is preferred, and polypropylene terminally modified with maleic anhydride at one terminal thereof is more preferred. By introducing a maleic anhydride moiety into a polypropylene polymer, two polyester resin-derived constituent moieties can bond to each other via an ester bond. In particular, it is considered that, by using a polypropylene polymer terminally modified with maleic anhydride at one terminal thereof, a polyester resin having a structure where two polyester resin-derived constituent moieties bond to each other by the maleic anhydride moiety at the terminal of the polypropylene polymer can be obtained. Accordingly, it is considered that by using a polypropylene polymer terminally modified with maleic anhydride at one terminal thereof, fixing property on polypropylene films is more improved and toner storability, printing durability and hot offset resistance performance are more improved.

Examples of commercial products of the terminal-modified polypropylene polymer include polypropylene terminally-modified with maleic anhydride at one terminal "X-10065" (Mn = 1,000), polypropylene terminally-modified with maleic anhydride at one terminal "X-10088" (Mn = 2,500), polypropylene terminally-modified with maleic anhydride at one terminal "X-10082" (Mn = 8,000), propylene/hexene copolymer terminally-modified with maleic anhydride at one terminal "X-10087" (Mn = 800), propylene/hexene copolymer terminally-modified with maleic anhydride at one terminal "X-10053" (Mn = 2,000) and propylene/hexene copolymer terminally-modified with maleic anhydride at one terminal "X-10052" (Mn = 4,000) (all available from Baker Hughes Incorporated).

The melting point of the polymer A is, from the viewpoint of more improving fixing property on PP films, preferably 10°C or higher, more preferably 20°C or higher, even more preferably 40°C or higher, further more preferably 60°C or higher, further more preferably 70°C or higher, further more preferably 80°C or higher, and is preferably 170°C or lower, more preferably 150°C or lower, even more preferably 140°C or lower, further more preferably 120°C or lower, further more preferably 100°C or lower.

The acid value of the polymer A is, from the viewpoint of more improving fixing property on PP films, preferably 200 mgKOH/g or less, more preferably 150 mgKOH/g or less, even more preferably 100 mgKOH/g or less, further more preferably 80 mgKOH/g or less, and is preferably 0.1 mgKOH/g or more, more preferably 1 mgKOH/g or more, even more preferably 5 mgKOH/g or more, further more preferably 10 mgKOH/g or more.

The hydroxyl value of the polymer A is, from the viewpoint of more improving fixing property on PP films, preferably 70 mgKOH/g or less, more preferably 30 mgKOH/g or less, even more preferably 10 mgKOH/g or less, and is 0 mgKOH/g or more, further more preferably 0 mgKOH/g.

The melting point, the acid value and the hydroxyl value are measured according to the methods described in the section of Examples.

The number-average molecular weight of the polymer A is, from the viewpoint of more improving fixing property on PP films, preferably 300 or more, more preferably 500 or more, even more preferably 700 or more, further more preferably 1,000 or more, and is preferably 50,000 or less, more preferably 30,000 or less, even more preferably 15,000 or less, further more preferably 10,000 or less, further more preferably 8,000 or less.

The number-average molecular weight is measured in gel permeation chromatography using polystyrene as a reference sample.

In the polyester resin A, the amount of the polymer A-derived constituent moiety relative to 100 parts by mass of the alcohol component and the carboxylic acid component forming the polyester resin-derived constituent moiety is, from the viewpoint of excellent fixing property on PP films and the viewpoint of excellent toner storability, printing durability and offset resistance, 8 parts by mass or more, and is, from the viewpoint of fixing property on PP films, 30 parts by mass or less, preferably 25 parts by mass or less, more preferably 23 parts by mass or less.

In the polyester resin A, the content of the polyester resin-derived constituent moiety and the constituent moiety derived from the modified polypropylene polymer A having a carboxylic acid group or a carboxylic anhydride group is preferably 48% by mass or more, more preferably 60% by mass or more, even more preferably 80% by mass or more, further more preferably 90% by mass or more, and is 100% by mass or less.

### [Method for Producing Binder Resin Composition]

The binder resin composition contains a polyester resin A.

The polyester resin A is obtained, for example:
(a) by polycondensation of a raw material monomer containing an alcohol component and a carboxylic acid component in the presence of a modified polypropylene polymer A having a carboxylic acid group or a carboxylic anhydride group, or
(b) by reacting a polyester resin with a modified polypropylene polymer A having a carboxylic acid group or a carboxylic anhydride group.

Examples of the above reaction include dehydrating condensation and interesterification.

The reaction condition is preferably a condition under which the carboxylic acid group or the carboxylic anhydride group of a polymer A reacts with an alcohol component and a carboxylic acid component through dehydrating condensation or interesterification.

More specifically, examples of the method for producing a polyester resin A include:
(i) polycondensation of a raw material monomer containing an alcohol component and a carboxylic acid component in the presence of a polymer A existing from the initial stage of reaction,
(ii) polycondensation of a raw material monomer containing an alcohol component and a carboxylic acid component provided that a polymer A is presented on the way of reaction,
(iii) polycondensation of a raw material monomer containing an alcohol component and a carboxylic acid component, and after the polycondensation, a polymer A is presented,
(iv) melting a polyester resin under heat and presenting a polymer A under the condition of a temperature of 180°C or higher and 250°C or lower.

Among these, the method (ii) is preferred.

Polycondensation of an alcohol component and a carboxylic acid component can be carried out, for example, in an inert gas atmosphere, optionally in the presence of an esterification catalyst and a polymerization inhibitor, at a temperature of around 180°C or higher and 250°C or lower.

As compared with an alcohol component and a carboxylic acid component, the polymer A has a high molecular weight and is, in general, poorly reactive. Consequently, from the viewpoint of enhancing the reaction activity of the polymer A to fully achieve complex formation, the esterification catalyst is preferably at least one selected from a tin compound and a titanium compound.

The esterification catalyst is, from the viewpoint of more improving fixing property on PP films, and from the viewpoint of more improving toner storability, printing durability and offset resistance, a tin(II) compound not having an Sn-C bond or a titanium compound is preferred. One or more of these can be used.

Examples of the tin(II) compound not having an Sn-C bond include a tin(II) compound having an Sn-O bond, and a tin(II) compound having an Sn-X bond where X represents a halogen atom.

Among these, a tin(II) compound having an Sn-O bond is preferred.

Tin(II) having an Sn-O bond includes tin(II) di(2-ethylhexanoate), and tin(II) dioctylate. Among these, tin(II) di(2-ethylhexanoate) is preferred.

Examples of the titanium compound include a titanium compound having a Ti-O bond.

Examples of the titanium compound having a Ti-O bond include a titanium compound having an alkoxy group having 1 or more and 28 or less carbon atoms, an alkenyloxy group having 1 or more and 28 or less carbon atoms, or an acyloxy group having 1 or more and 28 or less carbon atoms. Examples of the titanium compound having a Ti-O bond include titanium tetraisopropoxide, titanium tetrabutoxide, and titanium tetraoctoxide.

The titanium compound having a Ti-O bond may be used after reacted with triethanolamine, lactic acid or ammonium lactate.

The amount of the esterification catalyst relative to 100 parts by mass of the total amount of the alcohol component and the carboxylic acid component is preferably 0.01 part by mass or more, more preferably 0.1 part by mass or more, and is preferably 1 part by mass or less, more preferably 0.6 part by mass or less.

Also preferably, an esterification promoter is used along with the esterification catalyst. Examples of the esterification promoter include a pyrogallol compound. The pyrogallol compound is a compound having a benzene ring in which three hydrogen atoms adjacent to each other are substituted with a hydroxy group. Examples of the pyrogallol compound include pyrogallol, gallic acid, gallic acid esters, benzophenone derivatives such as 2,3,4-trihydroxybenzophenone, and 2,2',3,4-tetrahydroxybenzophenone, and catechin derivatives such as epigallocatechin and epigallocatechin gallate. Among these, gallic acid is preferred from the viewpoint of reactivity.

The amount of the esterification promoter relative to 100 parts by mass of the total amount of the alcohol component and the carboxylic acid component is preferably 0.001 part by mass or more, more preferably 0.01 part by mass or more, and is preferably 0.5 part by mass or less, more preferably 0.1 part by mass or less.

The temperature for the reaction with the polymer A is preferably 180°C or higher, more preferably 190°C or higher, even more preferably 200°C or higher, and is preferably 250°C or lower, more preferably 240°C or lower, even more preferably 230°C or lower. In the case where a polypropylene polymer terminally modified with maleic anhydride at the terminal is used and when the reaction is carried out at the temperature, the two polyester resin-derived constituent moieties can bond to each other via an ester bond. Consequently, fixing property on polypropylene films can be more improved and low-temperature fixing property and storability of toner can be more improved.

In the case where the polyester resin A has a polyester resin-derived constituent moiety, an addition polymer resin-derived constituent moiety and a polymer A-derived constituent moiety, the polyester resin A can be obtained, for example, according to:
(a) a method including polycondensation of a raw material monomer containing an alcohol component and a carboxylic acid component in the presence of a modified polypropylene polymer A having a carboxylic acid group or a carboxylic anhydride group, and addition polymerization of a raw material monomer for an addition polymer resin, and a bireactive monomer, or
(b) a method including reacting a resin that contains a polyester resin-derived constituent moiety and an addition polymer resin-derived constituent moiety, with a modified polypropylene polymer A having a carboxylic acid group or a carboxylic anhydride group.

Preferably, the above-mentioned condition is applied to the polycondensation.

In the addition polymerization, a raw material monomer for an addition polymer resin-derived constituent moiety and a bireactive monomer are reaction in a mode of addition polymerization.

The temperature of the addition polymerization is preferably 110°C or higher, more preferably 130°C or higher, and is preferably 220°C or lower, more preferably 200°C or lower. Preferably, the reaction system is depressurized in the latter half of polymerization to promote the reaction.

As the polymerization initiator for the addition polymerization, any known polymerization initiator can be used, and examples thereof include peroxides such as di-tert-butyl peroxide, persulfates such as sodium persulfate, and azo compounds such as 2,2'-azobis(2,4-dimethylvaleronitrile).

The amount of the polymerization initiator relative to 100 parts by mass of the raw material monomer for the addition polymer resin-derived constituent unit is preferably 1 part by mass or more, more preferably 3 parts by mass or more, even more preferably 5 parts by mass or more, and is preferably 20 parts by mass or less, more preferably 15 parts by mass or less, even more preferably 10 parts by mass or less.

The temperature for the reaction with the polymer A is preferably 180°C or higher, more preferably 190°C or higher, even more preferably 200°C or higher, and is preferably 250°C or lower, more preferably 240°C or lower, even more preferably 235°C or lower.

The softening point of the polyester resin A is, from the viewpoint of more improving storability, preferably 80°C or higher, more preferably 85°C or higher, and is, from the viewpoint of more improving low-temperature fixing property, preferably 170°C or lower, more preferably 150°C or lower.

The glass transition temperature of the polyester resin A is, from the viewpoint of more improving storability, preferably 40°C or higher, more preferably 50°C or higher, and is, from the viewpoint of more improving low-temperature fixing property, preferably 80°C or lower, more preferably 70°C or lower, even more preferably 60°C or lower.

The acid value of the polyester resin A is, from the viewpoint of improving durability, preferably 10 mgKOH/g or more, more preferably 15 mgKOH/g or more, even more preferably 20 mgKOH/g or more, and is preferably 40 mgKOH/g or less, more preferably 30 mgKOH/g or less.

The number-average molecular weight of the polyester resin A is, from the viewpoint of more improving hot offset resistance, preferably 1,500 or more, more preferably 2,000 or more, even more preferably 2,500 or more, and is, from the viewpoint of more improving low-temperature fixing property, preferably 6,000 or less, more preferably 4,000 or less.

In the case where the polyester resin A contains two or more kinds of polyester resins, preferably, the weighted average of the values of the constitutive resins falls within the the above-mentioned range.

The binder resin composition of one aspect of the present invention enables a toner to be excellent in fixing property on polypropylene films. Consequently, the composition can be used as a binder resin composition for toners for printing on polypropylene films.

### [Toner]

The toner contains the above-mentioned binder resin composition. The use of the binder resin composition provides a toner excellent in fixing property on polypropylene films, and therefore provides a toner for printing on polypropylene films. Namely, the toner can be used as a toner for developing electrostatic charges for printing on polypropylene films.

Preferably from the viewpoint of more improving low-temperature fixing property and hot offset resistance, the toner contains two or more kinds of polyester resins differing in the softening point by 15°C or more, in which, more preferably, at least one is the above-mentioned polyester resin A, and even more preferably, the polyester resin having a lower softening point is the polyester resin A.

In the case where either one is the polyester resin A, preferably, the polyester resin having a lower softening point is the polyester resin A from the viewpoint of more improving fixing property on PP films.

The softening point of the polyester resin H having a higher softening point (hereinafter this may be simply referred to as "resin H") is, from the viewpoint of more improving hot offset resistance, preferably 110°C or higher, more preferably 130°C or higher and is, from the viewpoint of more improving low-temperature fixing property, preferably 170°C or lower, more preferably 150°C or lower.

The softening point of the polyester resin L having a lower softening point (hereinafter this may be simply referred to as "resin L") is, from the viewpoint of more improving hot offset resistance, preferably 80°C or higher, more preferably 90°C or higher, and is, from the viewpoint of more improving low-temperature fixing property, preferably 120°C or lower, more preferably 110°C or lower.

The difference in the softening point between the resin H and the resin L is, from the viewpoint of more improving low-temperature fixing property and hot offset resistance, preferably 15°C or more, more preferably 20°C or more, and is, from the viewpoint of more improving low-temperature fixing property and hot offset resistance, preferably 60°C or less, more preferably 50°C or less.

The softening point of the polyester resin can be controlled by the degree of crosslinking or the like. From this viewpoint, the resin H contains a trivalent or higher carboxylic acid compound as the carboxylic acid component. The content of the trivalent or higher carboxylic acid compound in the carboxylic acid component is preferably 10 mol% or more, more preferably 15 mol% or more, and is, from the viewpoint of more improving low-temperature fixing property, preferably 35 mol% or less, more preferably 30% or less.

Preferably from the viewpoint of more improving low-temperature fixing property, the resin H contains an aliphatic dicarboxylic acid compound as the carboxylic acid component. The content of the aliphatic dicarboxylic acid compound in the carboxylic acid component is, from the viewpoint of more improving low-temperature fixing property, preferably 30 mol% or more, more preferably 40 mol% or more, even more preferably 50 mol% or more, and is, from the viewpoint of more improving durability, preferably 90 mol% or less, more preferably 80 mol% or less.

On the other hand, from the viewpoint of more improving hot offset resistance, the resin L preferably contains a trivalent or higher carboxylic acid compound, and the content of a trimellitic acid compound in the carboxylic acid component is, from the viewpoint of more improving low-temperature fixing property, preferably 10 mol% or less, more preferably 8 mol% or less, even more preferably 5 mol% or less, further more preferably 3 mol% or less, and is 0 mol%.

The mass ratio of the resin H to the resin L (resin H/resin L) is, from the viewpoint of more improving hot offset resistance, preferably 20/80 or more, more preferably 30/70 or more, even more preferably 40/60 or more, and is, from the viewpoint of more improving low-temperature fixing property, preferably 90/10 or less, more preferably 80/20 or less, even more preferably 70/30 or less.

The content of the polyester resin A is, from the viewpoint of more improving fixing property on PP films, storability, printing durability and offset resistance, preferably 20% by mass or more in the binder resin, more preferably 30% by mass or more, even more preferably 40% by mass or more, and is preferably 80% by mass or less, more preferably 70% by mass or less, even more preferably 60% by mass or less.

The toner may contain additives, for example, a colorant, an external release agent, a charge controlling agent, a magnetic powder, a fluidity enhancer, a conductivity controlling agent, a reinforcing filler such as a fibrous substance, an antioxidant, and a cleaning property enhancer, and preferably contains a colorant, a release agent and a charge controlling agent.

### <Colorant>

The colorant may be any of dyes, pigments, and the like that have been used as a colorant for toner, and examples thereof include carbon black, phthalocyanine blue, permanent brown FG, brilliant fast scarlet, pigment green B, rhodamine-B base, solvent red 49, solvent red 146, solvent blue 35, quinacridone, carmine 6B, and disazo yellow. The toner may be any of a black toner and a color toner.

The content of the colorant is, from the viewpoint of more improving image density and low-temperature fixing property of toner, preferably 1 part by mass or more relative to 100 parts by mass of the binder resin, more preferably 2 parts by mass or more, and is preferably 40 parts by mass or less, more preferably 20 parts by mass or less, even more preferably 10 parts by mass or less.

### <External Release Agent>

Examples of the external release agent include polypropylene wax, polyethylene wax, polypropylene-polyethylene copolymer wax; aliphatic hydrocarbon wax or oxides thereof such as microcrystalline wax, paraffin wax, Fischer-Tropsch wax, Sazole wax; ester wax such as carnauba wax, montan wax or deoxygenated wax thereof, fatty acid ester wax; fatty acid amides, fatty acids, higher alcohols, and fatty acid metal salts. One alone of these or two or more thereof may be used either singly or as combined.

The melting point of the external release agent is, from the viewpoint of more improving hot offset resistance of toner, preferably 60°C or higher, more preferably 70°C or higher, and is from the viewpoint of more improving low-temperature fixing property, preferably 160°C or lower, more preferably 140°C or lower, even more preferably 120°C or lower, further more preferably 110°C or lower.

The content of the external release agent is, from the viewpoint of more improving low-temperature fixing property and offset resistance of toner, and from the viewpoint of dispersibility thereof in a binder resin, preferably 0.5 part by mass or more relative to 100 parts by mass of a binder resin, more preferably 1.0 part by mass or more, even more preferably 1.5 parts by mass or more, and is preferably 10 parts by mass or less, more preferably 8 parts by mass or less, even more preferably 7 parts by mass or less.

### <Charge Controlling Agent>

The charge controlling agent may be any of a positive charge controlling agent and a negative charge controlling agent.

Examples of the positive charge controlling agent include a nigrosine dye, such as "Nigrosine Base EX", "Oil Black BS", "Oil Black SO", "Bontron N-01", "Bontron N-04", "Bontron N-07", "Bontron N-09", and "Bontron N-11" (all available from Orient Chemical Industries, Co., Ltd.); a triphenylmethane dye having a tertiary amine as a side chain, a quaternary ammonium salt compound, such as "Bontron P-51" (available from Orient Chemical Industries, Co., Ltd.), cetyltrimethylammonium bromide, "Copy Charge PX VP435" (available from Clariant AG); a polyamine resin, such as "AFP-B" (available from Orient Chemical Industries, Co., Ltd.); an imidazole derivative, such as "PLZ-2001" and "PLZ-8001" (all available from Shikoku Chemicals Corporation); and a styrene-acrylic resin, such as "FCA-701PT" (available from Fujikura Kasei Co., Ltd.).

Examples of the negative charge controlling agent include a metal-containing azo dye, such as "Valifast Black 3804", "Bontron S-31", "Bontron S-32", "Bontron S-34", and "Bontron S-36" (all available from Orient Chemical Industries, Co., Ltd.), and "Aizen Spilon Black TRH" and "T-77" (all available from Hodogaya Chemical Co., Ltd.); a metal compound of a benzilic acid compound, such as "LR-147" and "LR-297" (all available from Japan Carlit Co., Ltd.), a metal compound of a salicylic acid compound, such as "Bontron E-81", "Bontron E-84", "Bontron E-88", and "Bontron E-304" (all available from Orient Chemical Industries, Co., Ltd.), and "TN-105" (available from Hodogaya Chemical Co., Ltd.); a copper phthalocyanine dye; a quaternary ammonium salt, such as "Copy Charge NX VP434" (available from Clariant AG), a nitroimidazole derivative; and an organic metal compound.

The content of the charge controlling agent relative to 100 parts by mass of a binder resin is, from the viewpoint of charge stability of toner, preferably 0.01 part by mass or more, more preferably 0.2 part by mass or more, and is preferably 10 parts by mass or less, more preferably 5 parts by mass or less, even more preferably 3 parts by mass or less, further more preferably 2 parts by mass or less.

### [Method for Producing Toner]

The toner may be any toner obtained according to a known method such as a melt-kneading method, an emulsion phase inversion method, a polymerization method or an emulsion aggregation method, but from the viewpoint of productivity and colorant dispersibility, a pulverized toner according to a melt-kneading method is preferred. In the case of a ground toner according to a melt-kneading method, for example, raw materials of a binder resin, a colorant, a release agent, a charge controlling agent are uniformly mixed in a mixing machine such as a Henschel mixer, then melt-kneaded in a closed kneader, a single-screw or twin-screw extruder, an open roll kneading machine or the like, and thereafter cooled, ground and classified to produce a toner.

The volume median diameter (D₅₀) of the toner particles is preferably 3 µm or more, more preferably 4 µm or more, and is preferably 15 µm or less, more preferably 10 µm or less.

In this description, the volume median diameter (D₅₀) means a particle size to reach 50% of cumulative volume frequency of particle diameters calculated as volume fraction from smaller particles.

Preferably, the toner uses an external additive for improving transferability. Examples of the external additive include inorganic fine particles, such as silica, alumina, titania, zirconia, tin oxide and zinc oxide, and organic fine particles, such as resin particles such as melamine resin fine particles and polytetrafluoroethylene resin fine particles. One kind alone of these or two or more kinds thereof may be used either singly or as combined.

Silica is, for example, a hydrophobic silica that has been treated for hydrophobization.

Examples of the hydrophobizing agent for hydrophobizing the surfaces of silica fine particles include hexamethyldisilazane (HMDS), dimethyldichlorosilane (DMDS), silicone oil, octyltriethoxysilane (OTES), and methyltriethoxysilane. One alone of these or two or more thereof may be used.

Among these, silica is preferred, and from the viewpoint of toner transferability, hydrophobized silica that has been processed for hydrophobization is more preferred.

The average particle size of the external agent is, from the viewpoint of toner chargeability, fluidity and transferability, preferably 10 nm or more, more preferably 15 nm or more, and is preferably 250 nm or less, more preferably 200 nm or less, even more preferably 150 nm or less, further more preferably 90 nm or less.

The content of the external additive relative to 100 parts by mass of toner not processed with the external additive is, from the viewpoint of chargeability, fluidity and transferability of toner, preferably 0.05 part by mass or more, more preferably 0.1 part by mass or more, even more preferably 0.3 part by mass or more, and is preferably 5 parts by mass or less, more preferably 3 parts by mass or less.

The toner may be used as a one-component toner for development, or may be used as a two-component developing agent as combined with a carrier.

### [Printing on PP Film]

Printing on a PP film using the toner may be carried out using an ordinary electrophotographic system.

A printing method on a PP film includes, for example,
a step of forming an unfixed toner image on a PP film using a toner that contains an amorphous polyester resin (A), and
a fixing step of applying heat to the unfixed toner image to perform fixation.

Examples of the PP film include an untreated biaxially-stretched PP film, a corona-treated PP film, a chemical-treated PP film, a plasma-treated PP film, and a stretched film of a composite resin of PP and any other resin and additive. From the viewpoint of cost, an untreated biaxially-stretched PP film and a corona-treated PP film are preferred.

The fixing temperature of the binder resin is, from the viewpoint of effectively achieving interaction between the polymer A and a PP film, preferably not lower than the melting point of the polymer A.

The fixing temperature in electrophotography is, from the viewpoint of heat resistance of PP films, preferably 180°C or lower, more preferably 160°C or lower, even more preferably 140°C or lower, and is, from the viewpoint of fixing property, preferably 70°C or higher, more preferably 80°C or higher, even more preferably 90°C or higher.

In relation to the aforementioned aspects, the present invention further discloses a binder resin composition for toners, and a toner described hereinunder.
<1> A binder resin composition for toners, containing an amorphous polyester resin which has a polyester resin-derived constituent moiety that is a constituent moiety derived from a polyester resin and a modified polypropylene polymer A-derived constituent moiety that is a constituent moiety derived from a modified polypropylene polymer A having a carboxylic acid group or a carboxylic anhydride group and in which the polyester resin-derived constituent moiety and the modified polypropylene polymer A-derived constituent moiety bond to each other via a covalent bond, wherein:
   the polymer A is a polypropylene polymer terminally-modified with an unsaturated bond-having carboxylic acid compound or an anhydride thereof, and
   in the polyester resin, the amount of the polymer A-derived constituent unit is 8 parts by mass or more and 30 parts by mass or less relative to 100 parts by mass of the total of the alcohol component and the carboxylic acid component constituting the polyester resin-derived constituent moiety.
<2> A binder resin composition for toners, containing an amorphous polyester resin which has a polyester resin-derived constituent moiety that is a constituent moiety derived from a polyester resin, an addition polymer resin-derived constituent moiety that is a constituent moiety derived from an addition polymer resin, and a modified polypropylene polymer A-derived constituent moiety that is a constituent moiety derived from a modified polypropylene polymer A having a carboxylic acid group or a carboxylic anhydride group and in which the polyester resin-derived constituent moiety and the modified polypropylene polymer A-derived constituent moiety bond to each other via a covalent bond, wherein:
   the polymer A is a polypropylene polymer terminally-modified with an unsaturated bond-having carboxylic acid compound or an anhydride thereof, and
   in the polyester resin, the amount of the polymer A-derived constituent unit is 8 parts by mass or more and 30 parts by mass or less relative to 100 parts by mass of the total of the alcohol component and the carboxylic acid component constituting the polyester resin-derived constituent moiety.
<3> The binder resin composition for toners according to <1> or <2>, wherein the softening point of the polyester resin A is 80°C or higher and 170°C or lower.
<4> The binder resin composition for toners according to any of <1> to <3>, wherein the glass transition temperature of the polyester resin A is 40°C or higher and 80°C or lower.
<5> The binder resin composition for toners according to any of <1> to <4>, wherein the acid value of the polyester resin A is 10 mgKOH/g or more and 40 mgKOH/g or less.
<6> The binder resin composition for toners according to any of <1> to <5>, wherein the number-average molecular weight of the polyester resin A is 1,500 or more and 6,000 or less.
<7> A toner for developing electrostatic images, containing the binder resin composition of any of <1> to <6>.
<8> Use of the binder resin composition of any of <1> to <6> for printing on polypropylene films.
<9> Use of the toner for developing electrostatic images of <7> for printing on polypropylene films.
<10> A printing method on a polypropylene film, including:
   a step of forming an unfixed toner image on a polypropylene film using the toner for developing electrostatic images of <7>, and
   a fixing step of applying heat to the unfixed toner image to perform fusion.

### EXAMPLES

Properties were measured according to the methods mentioned below.

### [Measurement Method]

### [Melting point (Mp) of polymer A]

Using a differential scanning colorimeter "DSC210" (available from Seiko Instruments Inc.), a sample was heated up to 200°C, then cooled from that temperature down to 0°C at a cooling rate of 10°C/min, and again heated at a heating rate of 10°C/min. A maximum peak temperature with respect to the melting heat is referred to as a melting point.

### [Acid value of binder resin, polyester resin A and polymer A]

Measured according to JIS K 0070:1992. However, only for the solvent for the measurement, the mixed solvent of ethanol and ether as prescribed in JIS K 0070:1992 is changed to a mixed solvent of acetone and toluene (acetone/toluene = 1/1 (by volume)).

### [Softening point and glass transition temperature of binder resin, polyester resin A and polymer A]

### (1) Softening Point

Using a flow tester "CFT-500D" (available from Shimadzu Corporation), 1 g of a sample is extruded through a nozzle having a die pore diameter of 1 mm and a length of 1 mm while heating the sample at a heating rate of 6°C/minute and applying a load of 1.96 MPa thereto by a plunger. The softening point is determined as the temperature at which a half amount of the sample is flowed out when plotting a downward movement of the plunger of the flow tester relative to the temperature.

### (2) Endothermic highest peak temperature of polyester resin-derived constituent moiety

Using a differential scanning calorimeter "Q-100" (available from TA Instruments Japan Inc.), a sample is cooled from room temperature (20°C) to 0°C at a cooling rate of 10°C/minute and then allowed to stand as such under the conditions for 1 minute, and then heated up to 180°C at a heating rate of 10°C/minute to measure an endothermic heat amount thereof. Among the thus-observed endothermic peaks derived from the polyester resin-derived constituent moiety, the temperature of the peak located on the highest temperature side is defined as the endothermic highest peak temperature.

The peak for the polyester resin-derived constituent moiety can be assigned according to an ordinary method, and an endothermic peak derived from a modified polypropylene polymer A-derived constituent moiety generally appears on a low-temperature side. In the case where assignment to any peak is unclear, a polyester resin alone and a modified polypropylene polymer A alone are separately measured using a differential scanning calorimeter under the condition mentioned above, and the endothermic peak at a temperature nearer to each endothermic peak thereof is assigned to the endothermic peak derived from each constituent moiety.

### (3) Glass transition temperature

Using a differential scanning calorimeter "Q-100" (available from TA Instruments Japan Inc.), a sample is weighed in an amount of 0.01 to 0.02 g in an aluminum pan, heated up to 200°C and then cooled from the temperature to 0°C at a cooling rate of 10°C/minute. Next, the sample is heated up to 150°C at a heating rate of 10°C/minute to measure the endothermic peak thereof.

The temperature at which an extension of the baseline below the endothermic highest temperature is intersected with a tangential line having a maximum inclination of the curve in the range of from a rise-up portion to an apex of the peak is read as the glass transition temperature of the sample.

### [Volume median diameter (D₅₀) of toner particles]

The volume median diameter (D₅₀) of toner particles is measured by the following method.
Measuring Apparatus: Coulter Multisizer II (available from Beckman Coulter Inc.)
Aperture Diameter: 50 µm
Analyzing Software: Coulter Multisizer AccuComp Ver. 1.19 (available from Beckman Coulter Inc.)
Electrolyte Solution: Isotone II (available from Beckman Coulter Inc.)
Dispersion: 5 mass% electrolyte dispersion of Emulgen "109P" (available from Kao Corporation, polyoxyethylene lauryl ether, HLB: 13.6)
Dispersing Conditions:
   10 mg of a measurement sample is added to 5 mL of the aforementioned dispersion, and dispersed therein using an ultrasonic disperser for 1 minute. Thereafter, 25 mL of the electrolyte solution is added to the resultant dispersion, and the obtained mixture is further dispersed using the ultrasonic disperser for 1 minute to prepare a sample dispersion.
Measuring Conditions:
   100 mL of the electrolyte solution and the dispersion are added to a beaker, and 30,000 particles therein are measured at a concentration at which the particle size of 30,000 particles can be measured in 20 seconds, and the volume median diameter (D₅₀) of the toner particles is determined from the particle size distribution thereof.

### [Volume median diameter (D₅₀) of binder resin particles, colorant particles, and charge controlling agent particles]

The volume median diameter (D₅₀) of binder resin particles, colorant particles and charge controlling agent particles is measured by the following method.
(1) Measuring Apparatus: Laser diffraction-type particle sizer "LA-920" (available from Horiba Ltd.)
(2) Measuring Conditions:
   Distilled water is added to a measurement cell, and the volume median diameter (D₅₀) is measured at a concentration at which the absorbance could falls within an appropriate range.

### [Production of Resin]

### Production Example A1: Production of Resin A-1

Raw material monomers for polyester resin except for the polymer A, an esterification catalyst and a promoter were put into a 10-L four-necked flask equipped with a thermometer, a stainless steel stirring bar, a falling type condenser having a dewatering tube, and a nitrogen inlet tube, and polycondensed at 235°C in a mantle heater in a nitrogen atmosphere, and after uniform melting of the raw material monomers was confirmed, this was depressurized down to 60 Torr, and processed for dewatering condensation for 1 hour. Subsequently, this was cooled down to 160°C under normal pressure, then the polymer A was added and processed for addition polymerization while further kept at 220°C for 1 hour, and thereafter this was reacted for condensation under the condition of 220°C and 60 Torr until the softening point could reach the value shown in Table 1 to obtain a resin A-1.

### Production Examples A2 to A10, Comparative Production Examples A1 to A4, Reference Production Example: Resins A-2 to A-10, A-51 to A-54, and P

Resins were produced in the same manner as in Production Example A1 but using the raw materials shown in Table 1. In Production Examples A4 and A8, in order to prevent 1,2-propanediol from evaporating to scatter, the reaction temperature was stepwise elevated from 180°C and finally the polycondensation was carried out at 235°C.

### Production Example A21: Production of Resin A-21

As shown in Table 2, raw materials monomers (P) for polyester resin were put into a 10-L four-neck flask equipped with a thermometer, a stainless steel stirring bar, a falling type condenser having a dewatering tube, and a nitrogen inlet tube, and with stirring at 160°C in a nitrogen atmosphere, a mixture of raw material monomers (V) for addition polymer resin, and acrylic acid and a polymerization initiator was dropwise added thereto taking 60 minutes. This was further kept at 160°C for 1 hour, and then heated up to 200°C for addition polymerization. Subsequently, an esterification catalyst and a promoter were added, polycondensed at 235°C, then depressurized down to 60 Torr, and processed for condensation with dewatering for 1 hour. Subsequently, this was cooled down to 160°C under normal pressure, the polymer A was added, and after the reaction was continued for further 1 hours while kept at 220°C, this was reacted for condensation under the condition of 220°C and 60 Torr until the softening point could reach the value shown in Table 2 to obtain a resin A-21.

**Table 1 (1/3)**

| Production Example/Comparative Production Example/Reference Production Example | | | Production Example A1 | | Production Example A2 | | Production Example A3 | | Production Example A4 | | Production Example A5 | |
|---|---|---|---|---|---|---|---|---|---|---|---|---|
| Resin | | | A-1 | | A-2 | | A-3 | | A-4 | | A-5 | |
| Raw Material Monomers for Polyester Resin | | | chargedamount (g) | molar ratio *1 | charged amount (g) | molar ratio *1 | charged amount (g) | molar ratio *1 | charged amount (g) | molar ratio *1 | charged amount (g) | molar ratio *1 |
| | Alcohol Component | BPA-PO *3 | 6414 | 100 | 3929 | 60 | 6031 | 90 | 6114 | 90 | 6414 | 100 |
| | | BPA-EO *4 | - | - | 2432 | 40 | 622 | 10 | - | - | - | - |
| | | Ethylene glycol | - | - | - | - | - | - | - | - | - | - |
| | | 1,2-Propanediol | - | - | - | - | - | - | 148 | 10 | - | - |
| | Carboxylic Acid Component | Terephthalic acid | 2585 | 85 | 2640 | 85 | - | - | 2739 | 85 | 2585 | 85 |
| | | Isophthalic acid | - | - | - | - | - | - | - | - | - | - |
| | | Fumaric acid | - | - | - | - | 1244 | 56 | - | - | - | - |
| | | Trimellitic acid | - | - | - | - | 1103 | 30 | - | - | - | - |
| Polymer A | | | charged amount (g) | part by mass *2 | charged amount (g) | part by mass *2 | charged amount (g) | part by mass *2 | charged amount (g) | part by mass *2 | charged amount (g) | part by mass *2 |
| | Ma-PP (Mn 1000) | | 937 | 10 | 937 | 10 | 923 | 10 | 934 | 10 | - | - |
| | Ma-PP (Mn 2500) | | - | - | - | - | - | - | - | - | 937 | 10 |
| | Ma-PP/Hex (Mn 4000) | | - | - | - | - | - | - | - | - | - | - |
| | Ma-PP (Mn 268) ASAN | | - | - | - | - | - | - | - | - | - | - |
| | PP/PE-g-Ma | | - | - | - | - | - | - | - | - | - | - |
| | Acid value of Polymer A (mgKOH/g) | | 100 | | 100 | | 100 | | 100 | | 35 | |
| | Number-average molecular weight of Polymer A (Mn) | | 1000 | | 1000 | | 1000 | | 1000 | | 2500 | |
| | Modified site | | terminal | | terminal | | terminal | | terminal | | terminal | |
| | Melting point (°C) of Polymer A | | 90 | | 90 | | 90 | | 90 | | 130 | |
| Esterification Catalyst | | | charged amount (g) | part by mass *2 | charged amount (g) | part by mass *2 | charged amount (g) | part by mass *2 | charged amount (g) | part by mass *2 | charged amount (g) | part by mass *2 |
| | | Titanium Compound *5 | - | - | - | - | - | - | - | - | - | - |
| | | Tin(II) di(2-ethylhexanoate) | 45 | 0.5 | 45 | 0.5 | 45 | 0.5 | 45 | 0.5 | 45 | 0.5 |
| Promoter | | Gallic acid | 4.5 | 0.05 | 4.5 | 0.05 | - | - | 4.5 | 0.05 | 4.5 | 0.05 |
| Physical Properties | Glass transition temperature (°C) | | 59 | | 56 | | 64 | | 58 | | 61 | |
| | Softening point (°C) | | 103 | | 100 | | 152 | | 102 | | 106 | |
| | Crystallization index | | 0.57 | | 0.56 | | 0.42 | | 0.57 | | 0.58 | |

| | | | | | | | | | | | | |
|---|---|---|---|---|---|---|---|---|---|---|---|---|
| *1 This indicates molar number when the total amount of the alcohol component is taken as 100 moles. *2 Mixed amount of wax based on 100 parts by mass of the total amount of the alcohol component and the carboxylic acid component *3 BPA-PO: polyoxypropylene (2.2) adduct of 2,2-bis(4-hydroxyphenyl)propane *4 BPA-EO: polyoxyethylene (2.0) adduct of 2,2-bis(4-hydroxyphenyl)propane *5 Titanium compound: reaction product of titanium tetraisopropoxide and triethanolamine. Ma-PP (Mn 1000): polypropylene terminally-modified with maleic anhydride at one terminal, "X-10065" (available from Baker Hughes Incorporated, number-average molecular weight Mn 1000, melting point 90°C) Ma-PP (Mn 2500): polypropylene terminally-modified with maleic anhydride at one terminal, "X-10088" (available from Baker Hughes Incorporated, number-average molecular weight Mn 2500, melting point 130°C) Ma-PP/Hex (Mn 4000): propylene/hexene copolymer terminally-modified with maleic anhydride at one terminal, "X-10052" (available from Baker Hughes Incorporated, number-average molecular weight Mn 4000, melting point 80°C) Ma-PP (Mn 268) ASAN: dodecenyl succinic anhydride (available from Wako Pure Chemical Industry Co., Ltd., number-average molecular weight Mn 268) PP/PE-g-Ma: random graft maleic anhydride-modified ethylene/propylene copolymer "Toyo Tac PMA-T" (available from Toyobo Co., Ltd., melting point 93°C) | | | | | | | | | | | | |

**Table 1 (2/3)**

| Production Example/Comparative Production Example/Reference Production Example | | | Production Example A6 | | Production Example A7 | | Production Example A8 | | Production Example A9 | | Prod uction Example A10 | |
|---|---|---|---|---|---|---|---|---|---|---|---|---|
| Resin | | | A-6 | | A-7 | | A-8 | | A-9 | | A-10 | |
| Raw Material Monomers Polyester Resin | | | charged amount (g) | molar ratio *1 | charged amount (g) | molar ratio *1 | charged amount (g) | molar ratio *1 | charged amount (g) | molar ratio *1 | charged amount (g) | molar ratio *1 |
| | Alcohol Component | BPA-PO *3 | 6414 | 100 | 5702 | 100 | 4448 | 50 | 3929 | 60 | - | - |
| | | BPA-EO *4 | - | - | - | - | - | - | 2432 | 40 | - | - |
| | | Ethylene glycol | - | - | - | - | - | - | - | - | 1328 | 50 |
| | | 1,2-Propanediol | - | - | - | - | 966 | 50 | - | - | 1628 | 50 |
| | Carboxylic Acid Component | Terephthalic acid | 2585 | 85 | 2299 | 85 | 3586 | 85 | 2640 | 85 | 3555 | 50 |
| | | Isophthalic acid | - | - | - | - | - | - | - | - | 2489 | 35 |
| | | Fumaric acid | - | - | - | - | - | - | - | - | - | - |
| | | Trimellitic acid | - | - | - | - | - | - | - | - | - | - |
| Polymer A | | | charged amount (g) | part by mass *2 | charged amount (g) | part by mass *2 | charged amount (g) | part by mass *2 | charged amount (g) | part by mass *2 | charged amount (g) | part by mass *2 |
| | Ma-PP (Mn 1000) | | - | - | 1875 | 20 | 913 | 10 | 937 | 10 | 854 | 10 |
| | Ma-PP (Mn 2500) | | - | - | - | - | - | - | - | - | - | - |
| | Ma-PP/Hex (Mn 4000) | | 973 | 10 | - | - | - | - | - | - | - | - |
| | Ma-PP (Mn 268) ASAN | | - | - | - | - | - | - | - | - | - | - |
| | PP/PE-g-Ma | | - | - | - | - | - | - | - | - | - | - |
| | Acid value of Polymer A (mgKOH/g) | | 25 | | 100 | | 100 | | 100 | | 100 | |
| | Number-average molecular weight of Polymer A (Mn) | | 4000 | | 1000 | | 1000 | | 1000 | | 1000 | |
| | Modified site | | terminal | | terminal | | terminal | | terminal | | terminal | |
| | Melting point (°C) of Polymer A | | 80 | | 90 | | 90 | | 90 | | 90 | |
| Esterification Catalyst | | | charged amount (g) | part by mass *2 | charged amount (g) | part by mass *2 | charged amount (g) | part by mass *2 | charged amount (g) | part by mass *2 | charged amount (g) | part by mass *2 |
| | | Titanium Compound *5 | - | - | - | - | - | - | 45 | 0.5 | - | - |
| | | Tin(II) di(2-ethylhexanoate) | 45 | 0.5 | 45 | 0.5 | 45 | 0.5 | - | - | 50 | 0.5 |
| Promoter | | Gallic acid | 4.5 | 0.05 | 4.5 | 0.05 | 4.5 | 0.05 | 4.5 | 0.05 | 5 | 0.05 |
| Physical Properties | Glass transition temperature (°C) | | 63 | | 55 | | 56 | | 56 | | 49 | |
| | Softening point (°C) | | 104 | | 100 | | 99 | | 100 | | 2.1 | |
| | Crystallization index | | 0.61 | | 0.55 | | 0.57 | | 0.56 | | 105 | |

| | | | | | | | | | | | | |
|---|---|---|---|---|---|---|---|---|---|---|---|---|
| *1 This indicates molar number when the total amount of the alcohol component is taken as 100 moles. *2 Mixed amount of wax based on 100 parts by mass of the total amount of the alcohol component and the carboxylic acid component *3 BPA-PO: polyoxypropylene (2.2) adduct of 2,2-bis(4-hydroxyphenyl)propane *4 BPA-EO: polyoxyethylene (2.0) adduct of 2,2-bis(4-hydroxyphenyl)propane *5 Titanium compound: reaction product of titanium tetraisopropoxide and triethanolamine. Ma-PP (Mn 1000): polypropylene terminally-modified with maleic anhydride at one terminal, "X-10065" (available from Baker Hughes Incorporated, number-average molecular weight Mn 1000, melting point 90°C) Ma-PP (Mn 2500): polypropylene terminally-modified with maleic anhydride at one terminal, "X-10088" (available from Baker Hughes Incorporated, number-average molecular weight Mn 2500, melting point 130°C) Ma-PP/Hex (Mn 4000): propylene/hexene copolymer terminally-modified with maleic anhydride at one terminal, "X-10052" (available from Baker Hughes Incorporated, number-average molecular weight Mn 4000, melting point 80°C) Ma-PP (Mn 268) ASAN: dodecenyl succinic anhydride (available from Wako Pure Chemical Industry Co., Ltd., number-average molecular weight Mn 268) PP/PE-g-Ma: random graft maleic anhydride-modified ethylene/propylene copolymer "Toyo Tac PMA-T" (available from Toyobo Co., Ltd., melting point 93°C) | | | | | | | | | | | | |

**Table 1 (3/3)**

| Production Example/Comparative Production Example/Reference Production Example | | | Comparative Production Example A1 | | Comparative Production Example A2 | | Comparative Production Example A3 | | Comparative Production Example A4 | | Reference Production Example | |
|---|---|---|---|---|---|---|---|---|---|---|---|---|
| Resin | | | A-51 | | A-52 | | A-53 | | A-54 | | P | |
| Raw Material Monomers for Polyester Resin | | | charged amount (g) | molar ratio *1 | charged amount (g) | molar ratio *1 | charged amount (g) | molar ratio *1 | charged amount (g) | molar ratio *1 | charged amount (g) | molar ratio *1 |
| | Alcohol Component | BPA-PO *3 | 6414 | 100 | 4596 | 50 | 6414 | 100 | 7127 | 100 | 2232 | 30 |
| | | BPA-EO *4 | - | - | - | - | - | - | - | - | 4837 | 70 |
| | | Ethylene glycol | - | - | - | - | - | - | - | - | - | - |
| | | 1,2-Propanediol | - | - | 998 | 50 | - | - | - | - | - | - |
| | Carboxylic Acid Component | Terephthalic acid | 2585 | 85 | 3706 | 85 | 2585 | 85 | 2873 | 85 | 2400 | 68 |
| | | Isophthalic acid | - | - | - | - | - | - | - | - | - | - |
| | | Fumaric acid | - | - | - | - | - | - | - | - | - | - |
| | | Trimellitic acid | - | - | - | - | - | - | - | - | 530 | 13 |
| Polymer A | | | charged amount (g) | part by mass *2 | charged amount (g) | part by mass *2 | charged amount (g) | part by mass *2 | charged amount (g) | part by mass *2 | charged amount (g) | part by mass *2 |
| | Ma-PP (Mn 1000) | | - | - | 639 | 7 | - | - | - | - | - | - |
| | Ma-PP (Mn 2500) | | - | - | - | - | - | - | - | - | - | - |
| | Ma-PP/Hex (Mn 4000) | | - | - | - | - | - | - | - | - | - | - |
| | Ma-PP (Mn 268) ASAN | | - | - | - | - | 937 | 10 | - | - | - | - |
| | PP/PE-g-Ma | | 937 | 10 | - | - | - | - | - | - | - | - |
| | Acid value of Polymer A (mgKOH/g) | | 35 | | 50 | | 210 | | - | | - | |
| | Number-average molecular weight of Polymer A (Mn) | | 4000 | | 1000 | | 268 | | - | | - | |
| | Modified site | | random graft | | terminal | | terminal | | - | | - | |
| | Melting point (°C) of Polymer A | | 140 | | 90 | | (liquid at room temperature) | | - | | - | |
| Esterification Catalyst | | | charged amount (g) | part by mass *2 | charged amount (g) | part by mass *2 | charged amount (g) | part by mass *2 | charged amount (g) | part by mass *2 | charged amount (g) | part by mass *2 |
| | | Titanium Compound *5 | - | - | - | - | - | - | - | - | - | - |
| | | Tin(II) di(2-ethylhexanoate) | 45 | 0.5 | 45 | 0.5 | 45 | 0.5 | 45 | 0.5 | 45 | 0.5 |
| Promoter | | Gallic acid | 4.5 | 0.05 | 4.5 | 0.05 | 4.5 | 0.05 | 4.5 | 0.05 | 4.5 | 0.05 |
| Physical Properties | Glass transition temperature (°C) | | 65 | | 59 | | 38 | | 62 | | 65 | |
| | Softening point (°C) | | 107 | | 102 | | 92 | | 107 | | 145 | |
| | Crystallization index | | 0.61 | | 0.58 | | 0.41 | | 0.58 | | 0.45 | |

| | | | | | | | | | | | | |
|---|---|---|---|---|---|---|---|---|---|---|---|---|
| *1 This indicates molar number when the total amount of the alcohol component is taken as 100 moles. *2 Mixed amount of wax based on 100 parts by mass of the total amount of the alcohol component and the carboxylic acid component *3 BPA-PO: polyoxypropylene (2.2) adduct of 2,2-bis(4-hydroxyphenyl)propane *4 BPA-EO: polyoxyethylene (2.0) adduct of 2,2-bis(4-hydroxyphenyl)propane *5 Titanium compound: reaction product of titanium tetraisopropoxide and triethanolamine. Ma-PP (Mn 1000): polypropylene terminally-modified with maleic anhydride at one terminal, "X-10065" (available from Baker Hughes Incorporated, number-average molecular weight Mn 1000, melting point 90°C) Ma-PP (Mn 2500): polypropylene terminally-modified with maleic anhydride at one terminal, "X-10088" (available from Baker Hughes Incorporated, number-average molecular weight Mn 2500, melting point 130°C) Ma-PP/Hex (Mn 4000): propylene/hexene copolymer terminally-modified with maleic anhydride at one terminal, "X-10052" (available from Baker Hughes Incorporated, number-average molecular weight Mn 4000, melting point 80°C) Ma-PP (Mn 268) ASAN: dodecenyl succinic anhydride (available from Wako Pure Chemical Industry Co., Ltd., number-average molecular weight Mn 268) PP/PE-g-Ma: random graft maleic anhydride-modified ethylene/propylene copolymer "Toyo Tac PMA-T" (available from Toyobo Co., Ltd., melting point 93°C) | | | | | | | | | | | | |

**Table 2**

| Production Example/Reference Example | | | Production Example A21 | |
|---|---|---|---|---|
| Resin | | | A-21 | |
| Raw Material Monomers (P) for Polyester Resin | | | charged amount (g) | molar ratio *1 |
| | Alcohol Component | BPA-PO *4 | 5158 | 100 |
| | Carboxylic Acid Component | Terephthalic acid | 1957 | 80 |
| | | Fumaric acid | - | - |
| | | Trimellitic anhydride | - | - |
| Bireactive Monomer | | Acrylic acid | 84.9 | 8 |
| Raw Material Monomers (V) for Addition Polymer Resin | | | charged amount (g) | part by mass *2 |
| | Styrene | | 1287 | 80 |
| | 2-Ethylhexyl acrylate | | 322 | 20 |
| Polymerization Initiator | | Dibutyl peroxide | 80.4 | 5 |
| Polymer A | | | charged amount (g) | % by mass *3 |
| | Ma-PP (Mn 1000) | | 938 | 10 |
| | Acid value of Polymer A (mgKOH/g) | | 100 | |
| | Number-average molecular weight of Polymer A (Mn) | | 1000 | |
| | Modified site | | terminal | |
| | Melting point (°C) of Polymer A | | 90 | |
| Esterification Catalyst | | | charged amount (g) | part by mass *2 |
| | | Tin(II) di(2-ethylhexanoate) | 36 | 0.5 |
| Promoter | | Gallic acid | 3.6 | 0.05 |
| Proportion of addition polymer resin-derived constituent moiety (% by mass)*5 | | | 20 | |
| Physical Properties | Glass transition temperature (°C) | | 55 | |
| | Crystallization index | | 1.9 | |
| | Softening point (°C) | | 103 | |

| | | | | |
|---|---|---|---|---|
| *1 This means molar number when the total amount of the alcohol component is taken as 100 moles. *2 Amount based on 100 parts by mass of the total amount of the raw material monomers (V). *3 Mixed amount of wax based on 100 parts by mass of the total amount of the alcohol component and the carboxylic acid component *4 BPA-PO: Polyoxypropylene (2.2) adduct of 2,2-bis(4-hydroxyphenyl)propane Ma-PP (Mn 1000): polypropylene terminally-modified with maleic anhydride at one terminal, "X-10065" (available from Baker Hughes Incorporated, number-average molecular weight Mn 1000, melting point 90°C) | | | | |

### [Production of Toner]

### Examples 1 to 11, Comparative Examples 1 to 4

A binder resin shown in Table 3 in a total amount of 100 parts by mass, and 1 part by mass of a negative charge controlling agent "Bontron E-81" (available from Orient Chemical Industries Co., Ltd.), 5 parts by mass of a colorant "Pigment Blue 15:3" (available from Dainichiseika Color & Chemicals Mfg. Co., Ltd.), and 2 parts by mass of a release agent "HNP-9" (available from Nippon Seiro Co., Ltd., paraffin wax, melting point 80°C) were well stirred with a Henschel mixer, and then melt-kneaded with a co-rotation twin screw extruder having a total length of the kneading part of 1,560 mm, a screw diameter of 42 mm, and a barrel inner diameter of 43 mm. The rotation speed of the roll was 200 r/min, the heating temperature inside the roll was 100°C, the supplying rate of the mixture was 20 kg/hr, and the average retention time thereof was approximately 18 seconds. The resultant melt-kneaded mixture was cooled, then roughly pulverized, ground with a jet mill, and classified to obtain toner particles having a volume median diameter (D₅₀) of 8 µm.

To 100 parts by mass of the resultant toner particles, 1.5 parts by mass of "Aerosil R-972" (hydrophobic silica, available from Nippon Aerosil Co., Ltd., number-average particle diameter: 16 nm) and 1.0 part by mass of "SI-Y" (hydrophobic silica, available from Nippon Aerosil Co., Ltd., number-average particle diameter: 40 nm) as external additives were added and mixed with a Henschel mixer at 3,600 r/min for 5 minutes, so as to perform an external addition treatment to obtain a toner.

### [Evaluation]

### [Fixing Property on PP film]

The toner was charged into a nonmagnetic one-component developing machine "OKI MICROLINE 5400" (available from Oki Data Corporation), in which the toner deposition amount was controlled to be 0.45 ± 0.03 mg/cm², and a solid image of 4.1 cm × 13.0 cm was printed on an untreated biaxially-stretched polypropylene film "Torayfan industrial type 2500" (available from Toray Industries, Inc., thickness 60 µm) and fixed thereon at a fixing temperature of 130°C.

The solid image thus fixed on the untreated biaxially-stretched polypropylene film was scuffed with a needle and checked for peeling of the toner layer on the solid image surface. At this time, the mass given to the needle was varied to be 20 g, 50 g and 100 g.

### (Evaluation Criteria)

A: The toner layer did not peel under a load of 100 g.
B: The toner layer did not peel under a load of 50 g, but peeled under a load of 100 g.
C: The toner layer did not peel under a load of 20 g, but peeled under a load of 50 g.
D: The toner layer peeled under a load of 20 g.

### [Storability]

5 g of the toner was put into a cylindrical container, left therein at a temperature of 50°C and a relative humidity of 50% for 72 hours, then sieved through a 200-mesh (opening: 75 µm) screen, and the mass of the toner having passed through the screen was weighed, and the toner storability was evaluated according to the following evaluation criteria. The toner whose mass having passed through the screen is larger is more excellent in storability.

### (Evaluation Criteria)

A: The amount of toner having passed through the screen was 90% by mass or more.
B: The amount of toner having passed through the screen was 80% by mass or more and less than 90% by mass.
C: The amount of toner having passed through the screen was 20% by mass or more and less than 80% by mass.
D: The amount of toner having passed through the screen was less than 20% by mass.

### [Printing Durability]

The toner was charged into a nonmagnetic one-component developing machine "MicroLine 5400" (available from Oki Data Corporation), and tested in a printing test on ordinary copy paper at a coverage rate of 0.3%, in an environment at a temperature of 35°C and a relative humidity of 50%. A solid image was printed thereon once every hour, and checked for appearance of white streaks caused by toner filming on blades to evaluate durability. The test was stopped just when white streaks were confirmed to appear, and continued for at most 10 hours. Slower appearance of white streaks means more excellent durability.

### (Evaluation Criteria)

A: White streaks did not appear in 10 hours after the start of the test.
B: White streaks did not appear in 8 hours after the start of the test, but appeared until 10 hours.
C: White streaks did not appear in 6 hours after the start of the test, but appeared until 8 hours.
D: White streaks appeared until 6 hours.

### [Hot Offset Resistance]

The toner was charged into a copying machine "AR-505" (available from Sharp Corporation), and printed on ordinary copy paper to obtain an unfixed image (2 cm × 12 cm) in a toner deposition amount of 0.7 mg/cm². A modified fixing unit of the copying machine "AR-505" (available from Sharp Corporation), which had been so modified as to be offline drivable (fixing speed: 200 mm/sec), was used, for which the fixing temperature was stepwise raised from 90°C up to 240°C at intervals of 5°C. After image formation at each fixing temperature, white transfer paper was subsequently fed into the fixing roller unit under the same condition as above, and the temperature of the fixing roller unit at which the white transfer paper contaminated with the toner for the first time was referred to as a hot offset generation temperature. A higher hot offset generation temperature means more excellent hot offset resistance, and the hot offset resistance was evaluated according to the following evaluation criteria.

### (Evaluation Criteria)

A: Hot offset generation temperature is 160°C or higher.
B: Hot offset generation temperature is 140°C or higher and lower than 160°C.
C: Hot offset generation temperature is 120°C or higher and lower than 140°C.
D: Hot offset generation temperature is lower than 120°C.

**Table 3**

| | Binder Resin | | | | Evaluation | | | |
|---|---|---|---|---|---|---|---|---|
| | Resin 1 | | Resin 2 | | Fixing on PP Film | Storability | Printing Durability | Hot Offset Resistance |
| | kind | mass% *1 | kind | mass% *1 | | | | |
| Example 1 | A-1 | 50 | P | 50 | A | A | A | B |
| Example 2 | A-2 | 50 | P | 50 | A | A | A | A |
| Example 3 | A-3 | 50 | P | 50 | A | A | A | A |
| Example 4 | A-4 | 50 | P | 50 | A | B | A | A |
| Example 5 | A-5 | 50 | P | 50 | B | A | A | A |
| Example 6 | A-6 | 50 | P | 50 | A | A | A | A |
| Example 7 | A-7 | 50 | P | 50 | A | A | A | A |
| Example 8 | A-8 | 50 | P | 50 | A | B | B | A |
| Example 9 | A-9 | 50 | P | 50 | A | A | A | A |
| Example 10 | A-10 | 50 | P | 50 | A | A | B | B |
| Example 11 | A-21 | 50 | P | 50 | A | A | A | A |
| Comparative Example 1 | A-51 | 50 | P | 50 | C | B | B | C |
| Comparative Example 2 | A-52 | 50 | P | 50 | C | A | B | B |
| Comparative Example 3 | A-53 | 50 | P | 50 | D | D | B | B |
| Comparative Example 4 | A-54 | 50 | P | 50 | D | A | D | D |

| | | | | | | | | |
|---|---|---|---|---|---|---|---|---|
| *1 Amount (mass%) relative to binder resin. | | | | | | | | |

As in the above, it is known that the toners of Examples have excellent fixing property on PP films as compared with the toners of Comparative Examples.

Further, it is also known that the toners of Examples containing a binder resin composition of the present invention exhibit excellent storability while having an excellent low-temperature fixing property.

In addition, it is known that the toners of Examples containing a binder resin composition of the present invention are excellent in printing durability and hot offset resistance.

## Claims

1. A binder resin composition for toners, comprising an amorphous polyester resin which has a polyester resin-derived constituent moiety that is a constituent moiety derived from a polyester resin and a modified polypropylene polymer A-derived constituent moiety that is a constituent moiety derived from a modified polypropylene polymer A having a carboxylic acid group or a carboxylic anhydride group and in which the polyester resin-derived constituent moiety and the modified polypropylene polymer A-derived constituent moiety bond to each other via a covalent bond, wherein:
the polymer A is a polypropylene polymer terminally-modified with an unsaturated bond-having carboxylic acid compound or an anhydride thereof, and
in the polyester resin, the amount of the polymer A-derived constituent unit is 8 parts by mass or more and 30 parts by mass or less relative to 100 parts by mass of the total of the alcohol component and the carboxylic acid component constituting the polyester resin-derived constituent moiety.

2. The binder resin composition according to claim 1, wherein the polyester resin-derived constituent moiety and the modified polypropylene polymer A-derived constituent moiety bond to each other via an ester bond.

3. The binder resin composition according to claim 1 or 2, wherein the amorphous polyester resin further has an addition polymer resin-derived constituent moiety that is a constituent moiety derived from an addition polymer resin.

4. The binder resin composition according to any of claims 1 to 3, wherein the polyester resin of the amorphous polyester resin is a polycondensate of an alcohol component that contains an alkylene oxide adduct of bisphenol A represented by a formula (I): 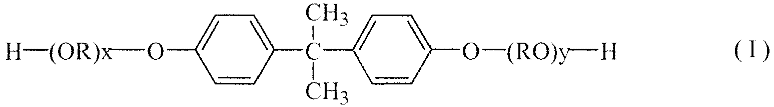 wherein OR and RO each represent an oxyalkylene group, R represents an ethylene or propylene group, x and y each represent an average addition molar number of an alkylene oxide and each is a positive number, and a value of the sum of x and y is 1 or more and 16 or less; and a carboxylic acid component.

5. The binder resin composition according to any of claims 1 to 3, wherein the polyester resin of the amorphous polyester resin is a polycondensate of an alcohol component that contains an aliphatic alcohol having 2 or more and 6 or less carbon atoms, and a carboxylic acid component.

6. The binder resin composition according to any of claims 1 to 5, wherein the amorphous polyester resin is obtained:
(a) by polycondensation of a raw material monomer containing an alcohol component and a carboxylic acid component in the presence of a modified polypropylene polymer A having a carboxylic acid group or a carboxylic anhydride group, or
(b) by reacting a polyester resin with a modified polypropylene polymer A having a carboxylic acid group or a carboxylic anhydride group.

7. The binder resin composition according to any of claims 1 to 6, wherein the polymer A is modified with maleic anhydride.

8. The binder resin composition according to any of claims 1 to 7, wherein the acid value of the polymer A is 20 mgKOH/g or more and 100 mgKOH/g or less.

9. The binder resin composition according to any of claims 1 to 8, wherein the number-average molecular weight of the polymer A is 500 or more and 8,000 or less.

10. A toner for developing electrostatic images, comprising the binder resin composition of any of claims 1 to 9.
